# EUROPEAN PATENT APPLICATION

(11) **EP 2 913 862 A1**
(43) Date of publication of application: **02.09.2015**
(21) Application number: 14157098.6
(22) Date of filing: 27.02.2014
(51) Int. Cl.: H01M 2/06

(54) **A process of joining metal components in battery cell, and a battery cell prepared by said process**

(71) Applicant: Solvay SA, 1120 Bruxelles (BE)
(72) Inventor: Kyu Youl, Lee, 790-835 Gyeongsangbuk-do (KR)
(74) Representative: Mross, Stefan P.M.

(57) **Abstract**

The present invention provides a process of joining at least a part of a current collector with at least a part of an electrode terminal in a battery cell, and a battery cell prepared by said process.

## Description

### TECHNICAL FIELD

The present invention relates to a process of joining a current collector with an electrode terminal in a battery cell, and to a battery cell prepared by said process. The process according to the present invention can be useful for forming an excellent connection between the current collector and the electrode terminal in a battery system.

### BACKGROUND OF THE INVENTION

Secondary batteries, including lithium ion batteries, lithium air batteries, lithium sulfur batteries, sodium sulfur batteries, and sodium ion batteries, are well-known rechargeable means for storing electric energy. The secondary batteries, such as lithium ion batteries, generally comprise a cathode, an anode and an electrolyte composition containing a solvent, a conductive salt and, often, one or more additives. The cathode and anode usually prepared by applying a composition comprising an active-electrode material, such as a cathode active material and an anode active material (depending on a final application of the electrode), a binder, a solvent, and optionally one or more additives, on a metal substrate (often referred to "current collector"), then drying, and compression-molding.

After forming the active-electrode layer, an electrode terminal is generally joined to an outermost part of the current collector to further extend an electric current flow. Solid-state welding methods, such as ultrasonic welding, and friction welding, are generally used for forming a connection between the current collector and the electrode terminal. However, said conventional welding processes suffer several disadvantages, including use of high temperature, expensive apparatus cost, and long process time, and in particular, often results in an unfavorable contact resistance between the two components, thereby decreasing an overall electric connectivity in the battery system, especially when different metal elements are adopted for the current collector and the electrode terminal.

Therefore, an improved process which does not suffer said disadvantages when used for joining the current collector with the electrode terminal in a battery cell is desired in the art.

### DESCRIPTION OF THE INVENTION

A purpose of the present invention is to provide a process of joining a current collector with an electrode terminal, which enables a formation of excellent electrical connection between the two metal components in a battery cell. Another purpose of the present invention is to provide an easy and efficient process for joining a current collector with an electrode terminal in a battery cell.

The present invention therefore relates to a process of joining at least a part of a current collector with at least a part of an electrode terminal in a battery cell using a brazing flux. Indeed, it has been surprisingly found that an excellent connection having superior characteristics, particularly having a good contact resistance, can be obtained between the current collector and the electrode terminal via the process of the present invention.

One of the essential features of the present invention resides in the use of brazing flux for joining the two components. Such use enables a high quality connection compared to the conventional connection processes, such as ultrasonic welding and friction welding, which often cause damages or generate unfavorable intermetallic compounds on joining surfaces of the current collector and the electrode terminal. It has been found that the use of brazing flux as a means to join the current collector with the electrode terminal does not cause any substantial harm or unfavorably-generated intermetallic compounds on the joining surfaces.

In the present invention, the term "brazing flux" is intended to denote in particular a flux suitable for brazing at least two same or different metal or metal alloy pieces. The brazing flux often comprises at least one metal element of aluminum, silicon, zinc, or alloys thereof. The brazing flux in the present invention is preferably the flux which is generally noncorrosive and suitable particularly for the brazing of parts of aluminium or aluminium alloys with parts of aluminium, copper, steel, titanium, or alloys thereof. Particular examples of the brazing flux include those described in PCT application WO 2011/110532 by Solvay Fluor GmbH, but the present invention is not limited thereto. Fluxes suitable as the brazing flux are commercially available, e.g. from Solvay Fluor GmbH, Hannover/Germany under the tradename Nocolok^{®}.

By way of example, the brazing flux of the present invention can be alkali metal fluoroaluminates, such as a potassium fluoroaluminate flux and cesium fluoroaluminate flux. Such potassium fluoroaluminate fluxes are generically described, see for example, US patents 3,951,328, 4,579,605 or 6,221,129, or US patent 3,971,501 which describes a flux based on KAlF₄ and K₃AlF₆. US patents 4,670,067 and 4,689,092 as well as EP 2236241 A1 describe a flux based on potassium fluoroaluminate and cesium fluoroaluminate.

In the present invention, fluxes based on cesium fluoroaluminate are preferred. The term "cesium fluoroaluminate" includes those chemical compounds comprising or consisting of cesium, aluminium and fluorine. The term includes the hydrates of cesium fluoroaluminates. A flux consisting of cesium fluoroaluminate is especially preferred. Preferred cesium fluoroaluminates are CsAlF₄, Cs₂AlF₅, Cs₃AlF₆, mechanical mixtures thereof, mixed complexes (adducts), e.g. CsAlF₄·Cs₂AlF₅, or hydrates. Beside cesium fluoroaluminate, the flux may contain other alkali metal fluoroaluminates, preferably potassium fluoroaluminate flux, e.g. KAlF₄, K₂AlF₅, their hydrates or mixtures of two or more of these potassium fluoroaluminates, provided that the melting point of the resulting mixture is equal to or lower than 548°C, preferably equal to or lower than 546°C. The term "based on" preferably means that at least 45 % by weight, preferably at least 50 % by weight are constituted by cesium fluoroaluminate. Preferably, the content of cesium fluoroaluminate is equal to or greater than 90 % by weight. The remainder to 100 % by is constituted preferably by potassium fluoroaluminate and/or lithium fluoroaluminate. The content of cesium fluoroaluminate is especially preferably essentially 100 % by weight. The flux containing cesium and potassium fluoroaluminate and/or lithium fluoroaluminate can be prepared by mechanically mixing cesium fluoroaluminate and the other fluoroaluminates, or by co-precipitation as described for example in US.-A 4,670,067.

The brazing flux of the present invention can also be an alkali metal fluorozincate flux, especially a potassium fluorozincate flux, can be used. Such fluxes are disclosed, for example, in US patents 432221 and 6743409.

The brazing flux of the present invention can also be a fluorostannate flux. A flux based on alkali metal fluorostannates is described in US patent 6,880,746.

The brazing flux may also contain or consist of irreversibly dehydrated K₂AlF₅. This specific phase of K₂AlF₅ (hereafter often denoted "phase II salt") and its manufacture is described in US patent 5,980,650. By heating K₂AlF₅·H₂O to 90 to 265°C, a reversibly dehydrated K₂AlF₅ phase is obtained which is hereafter often called "phase I salt". By heating K₂AlF₅·H₂O or the phase I salt to temperatures above about 265°C, the irreversibly dehydrated K₂AlF₅, the phase II salt, is formed. Under quasi-isobaric conditions, the phase II salt is even formed at temperatures as low as 228°C. While the formation of the phase II salt starts at the relatively low temperatures mentioned above, it is preferred to heat K₂AlF₅·H₂O or the phase I salt to temperatures equal to or above 375°C. Brittle crystals form, and the conversion to the phase II salt is high. It is even possible to heat the starting material to a temperature up to or even higher than 500°C.

The brazing flux may comprise fine particles, medium fine particles, and/or coarse particles. In the context of the present invention, the term "fine" refers to flux in which 50 % of the particles have a particle size smaller than 5 µm and 90 % of the particles have a particle size of less than 9 µm; the remaining particles are then the same size or larger than the indicated values. Fine brazing flux is preferably produced in which 50 % of all particles have a diameter of < 3.8 µm and 90 % of all particles have a diameter of < 8 µm. The size is determined using laser diffraction.

Within the context of the present invention, the term "medium fine" refers to a product in which 50 % of the particles of the material produced have a grain size of less than 11 µm and 90 % have a grain size of less than 27 µm. The diameters of the remaining particles are at or above the listed values. "Medium fine" preferably means that 50 % of all particles produced have a grain size of less than 10 µm and 90 % of all particles have a grain size of less than 26 µm. The particle size analysis is again carried out by laser diffraction.

In the context of the present invention, the term "coarse" means that 50 % of all particles have a grain size of less than 22 µm and 90 % have a grain size of less than 40 µm. The term "coarse" preferably means that 50 % of all particles have a grain size of, less than 21 µm and 90 % have a grain size of less than 39 µm. The diameters of the remaining particles correspond to the recited dimensions or lie below them.

The brazing flux used in the process of the present invention can have a particle size distribution described by the following parameters:

An X10 value of greater than 0 µm and lower than 1 µm, an X50 value of equal to or greater than 1 µm and equal to or less than 3 µm, and an X90 value of lower than 7 µm. The term "X50 equal to or greater than 1 µm" denotes that the particle size of the smallest 50 % of the particles present in the flux is equal to or lower than 1 µm, and accordingly, 50 % of the particles have a size greater than 1 µm.

The particle sizes are determined by laser diffraction, for example in a HELOS^{®} apparatus combined with a RODOS^{®} disperser.

In the present invention, the term "aluminium alloy" is intended to denote in particular parts the aluminium content of which is equal to or greater than 95 % by weight, and which may contain lower amounts of iron, manganese, magnesium and/or other alloying metals. In the present invention, the term "copper alloy" is intended to denote in particular alloys based on copper which contain at least 45 % by weight, preferably at least 70 % by weight, more preferably at least 95 % by weight of copper and include all types of brass and bronze.

Optionally, the brazing flux used in the present invention further comprises a liquid carrier or additives which facilitate the brazing process or improve the properties of the brazed parts, for example, a liquid carrier, a binder, a thickener, a solder or a solder precursor or anticorrosive additives. A brazing flux further comprising at least one further component in addition to fundamental flux is sometimes denoted as "flux preparation" in the following.

Additives which facilitate the brazing process are, for example, solder metal, for example, aluminium-silicon alloy, or solder metal precursors, e.g. silicon, germanium, copper or potassium hexafluorosilicate or cesium hexafluorosilicate ; the hexafluorosilicates are also useful as fundamental fluxes. Brazing may be easier with a flux containing these additives because it is not necessary to clad the parts to be brazed with solder metal in a separate step. If present, these additives are preferably contained in an amount equal to or lower than 50 % by weight of the total weight of the additives plus the brazing flux. Preferably, the fundamental flux contains or consists of at least one compound selected from the group consisting of KAlF₄, K₂AlF₅, CsAlF₄, Cs₂AlF₅, Cs₃AlF₆, KCs₂Al₃F₁₂, KZnF₃, K₂SiF₆, and their hydrates. More preferably, the fundamental flux is selected from the group consisting of KAlF₄, K₂AlF₅, KAlF₅·H₂O, CsAlF₄, Cs₂AlF₅, Cs₃AlF₆, KCs₂Al₃F₁₂, and mixtures thereof.

A brazing flux comprising potassium fluoroaluminate as fundamental flux and lithium fluoride as additive is known from EP-A-0 091231. It is stated that the content of LiF should not fall short of 2 % by weight and not exceed 7 % by weight.

The use of solder metal precursors as additives is described in US 5,100,048 ; the use of hexafluorosilicates as additives or fundamental flux is described in US patent 6,648,212.

Other additives improve the properties of the brazed parts.

A fundamental flux comprising Li compounds as additive, especially Li₃AlF₆, is described in international patent application publication No. WO 2010/060869. Lithium-fluoro compounds are especially suitable, preferably selected from the group consisting of LiF, K₂LiAlF₆ and Li₃AlF₆, and especially LiF and Li₃AlF₆. The content of Li⁺ is preferably equal to or greater than 0.1 % by weight which corresponds to a content of about 1 % by weight (exactly : 0.77 % by weight) of Li₃AlF₆ in the modified flux. Generally, the content of Li⁺ in that flux is equal to or lower than 4.6 % by weight. This corresponds to a content of about 36 % by weight of Li₃AlF₆ in that flux. The Li salt additives improve the resistance of the brazed parts against corrosion.

Other additives which are optionally added to the flux are the metal salts disclosed in WO 2005/092563. The additives described therein, especially the oxides and fluorides of lanthanum, cerium, niobium, bismuth, zirconium, titanium, improve the surface properties, e.g. provide a higher smoothness, and also improve the solder flow during brazing. If present, these additives preferably are contained in an amount of equal to or lower than 10 % by weight of the total weight of the flux.

The process of the present invention preferably comprises applying the brazing flux on at least a part of joining surfaces of the current collector and the electrode terminal, optionally drying, contacting the joining surfaces, and heating the brazing flux, optionally cooling, to form a connection between the current collector and the electrode terminal.

Several methods can be considered when applying the brazing flux at least on a part of surface or surfaces of current collector and/or the electrode terminal. According to one method, the brazing fluxes are applied in dry form by means of electrostatic forces. In other words, it can be coated on the part to be brazed electrostatically. According to another method, the brazing fluxes are applied in wet form, i.e. in the form of a slurry, to the surface or surfaces. Herein, the brazing flux is generally dispersed in water (e.g. de-ionized water, distilled water or tap water), organic carrier or mixtures thereof and applied for instance by spraying, painting, printing or by immersing the parts into a respective flux preparation. The organic carrier is e.g. a monobasic alcohol, for example, ethanol, n-propanol and isopropanol, or a dibasic alcohol, for example, glycols, such as ethylene glycol, propylene glycol and diethylene glycol.

The brazing flux preparation may be an aqueous flux slurry, a flux paste or a flux preparation comprising a binder. Preferably, the brazing flux is contained in a flux paste. Flux pastes are very viscous. The particulate brazing flux is contained in it in an amount equal to or greater than 20 wt %, preferably equal to or greater than 30 wt % of the total flux preparation. Preferably, the content of the particulate brazing flux in the paste is equal to or lower than 70 % by weight of the total flux preparation. Flux pastes may contain the particulate brazing flux in a range of 40 to 60 % by weight of the total flux preparation. The carriers of pastes are often organic liquids. Preferred carriers in pastes are glycols, especially ethylene glycol and dipropylene glycol ; mineral-oil products and their derivatives or alcohols, especially 2-propanol.

An amount of the brazing flux to be applied can be chosen in a range which at least enables a firm connection between the current collector and the electrode terminal.

In the case that the brazing flux was applied by means of a paste or liquid flux preparation, the flux clad parts are optionally dried after applying the flux preparation.

The brazing temperature in the heating step is known to the expert and depends mainly on the brazing flux, the solder applied, and the metal components to be brazed. For example, for aluminium brazing using a potassium fluoroaluminate flux, the brazing is performed at a temperature at about 580 to 620°C or higher. Depending to the metals or metal alloys, the brazing temperature can also be from about 540°C to about 650°C. Optionally, the brazed parts are cooled after brazing.

By way of example, when the connection with the brazing flux is intended for joining aluminium (or alloys thereof) with copper (or alloys thereof), the brazed parts can be brought to a temperature preferably lower than the melting point of the Al-Cu eutectic. This melting point is reported to be 548°C (sometimes, it is reported to be 547°C). Consequently, the brazed parts are preferably brought to a temperature equal to or lower than 548°C, especially preferably equal to or lower than 547°C where formation of the alloy stops.

During brazing, an alloy forms from aluminium (or alloys thereof) and copper. The formed alloy has a melting point - about 547°C or 548°C which temperature may be influenced by alloyed metals in the aluminium or copper, if present - considerably lower than that of the aluminium (or alloys thereof) and copper. A relatively fast diffusion of copper in aluminium and aluminium in copper, respectively, causes a fast expansion of the low-melting alloy from copper and aluminium. Thus, it is preferred to perform brazing quickly and, if necessary, to cool the joined parts to a temperature low enough after brazing such that after the parts are desirably joined, no further alloy of aluminium and copper forms.

In the present invention, the heating is preferably applied exclusively on a part to be brazed in order to avoid any damages on the other components of a battery cell, such as an active-electrode material layer on the current collector coated before the brazing. Thus, in one embodiment of the present invention, the heating during the process of the present invention is conducted by applying a laser beam topically on a region in which the brazing flux is applied. For instance, a laser brazing process disclosed in US Pub. No. 2003/0178399 A1 can be considered. Conditions of the laser beam, such as energy, beam size, irradiation time, and other control parameters, can be chosen in a range which does not cause substantial harm to other components in a battery cell. By way of example, when the connection with the brazing flux is intended for joining aluminium (or alloys thereof) with copper (or alloys thereof), energy of the laser beam may be chosen in a range lower than a melting point of copper and higher than a melting point of aluminium.

The process of the present invention is especially preferred when a thickness of the components to be brazed, i.e. the current collector and the electrode terminal, is relatively small, and therefore, when an application of substantial mechanical power for joining the two components is not possible or not preferred.

By way of example, the thickness of the current collector in the present invention is from 0.001 to 1 mm. The thickness of the current collector is preferably from 0.01 to 1 mm, more preferably from 0.02 to 0.03 mm. Alternatively, the thickness of the current collector in the present invention can be from 0.005 to 0.02 mm.

By way of example, the thickness of the electrode terminal in the present invention is from 0.001 to 10 mm. The thickness of the electrode terminal is preferably from 0.5 to 5 mm, more preferably from 2 to 5 mm, in case the battery is a prismatic type. Alternatively, the thickness of the electrode terminal in the prismatic type battery can be from 0.5 to 2 mm. In case the battery is a pouch type, the thickness of the electrode terminal is preferably from 0.01 to 1 mm, more preferably from 0.05 to 0.5 mm. Alternatively, the thickness of the electrode terminal in the pouch type battery can be from 0.005 to 0.05 mm.

The process of the present invention shows particularly good results when the materials for the current collector and the electrode terminal are different. Examples of such material include alumiuium, copper, steel (e.g. stainless steel), gold, silver, nickel, tungsten, titanium, alloys thereof, and any combination thereof, but the present invention is not limited thereto. In a preferred embodiment of the present invention, the current collector in a battery cell comprises at least one metal element of copper or alloys thereof. In another preferred embodiment of the present invention, the electrode terminal in a battery cell comprises at least one metal element of aluminium or alloys thereof. In a particularly preferred embodiment of the present invention, the process of the present invention is applied for joining the current collector comprising or consisting of copper or alloys thereof with the electrode terminal comprising or consisting of aluminium or alloys thereof.

The process according to the present invention can be applied in any battery in which a connection between a current collector and an electrode terminal is required. Examples of the battery include lithium batteries, such as lithium-ion battery, lithium air battery, and lithium sulfur battery, or sodium batteries, such as sodium ion battery, and sodium sulfur battery, but the present invention is not limited thereto. The process of the present invention can provide a battery having an excellent connection between a current collector and an electrode terminal, particularly in terms of contact resistance between the two components.

Therefore, another aspect of the present invention concerns a battery cell at least comprising an anode, a cathode, and an electrolyte composition, each of the anode and the cathode comprises an active-electrode material layer, a current collector, and an electrode terminal, wherein at least one electrode terminal is joined to at least a part of the current collector by means of a brazing flux.

A battery cell generally comprises at least a cathode, an anode, and an electrolyte composition. Each electrode, namely an anode and a cathode, respectively, comprises at least an active-electrode material layer, a current collector, and an electrode terminal.

Selection and preparation of an anode, a cathode, and an electrolyte composition, components contained in each of them, and other possibly existing components are known in the art, and are not particularly limited in the present invention.

The battery cell of the present invention can be prepared by utilizing one or more various methods known in the art, and can have a form of, for instance, prismatic or pouch type. Hereinafter, an example of the preparation of the battery according to the present invention will be explained, yet the present invention is not limited thereto.

First, an appropriate current collector foil for a cathode is prepared and a cathode-forming composition generally comprising an active cathode material, a binder, and a solvent, and optionally other additives, is applied on one side of the current collector. The current collector on which the cathode-forming composition is applied is dried to remove the solvent, thereby forming an active cathode material layer. Other means, such as additional heat, ultra-violet, radiation, and electron beam, may be applied during the drying. A temperature and time for this process are generally from 40 to 150°C and 5 min. to 20 hours, respectively.

On the opposite side of the cathode, an appropriate current collector foil for an anode is prepared and a anode-forming composition generally comprising an active anode material, a binder, and a solvent, and optionally other additives, is applied on one side of the current collector. The current collector on which the anode-forming composition is applied is dried to remove the solvent, thereby forming an active anode material layer. Other means, such as additional heat, ultra-violet, radiation, and electron beam, may be applied during the drying. A temperature and time for this process are generally from 40 to 150°C and 5 min. to 20 hours, respectively.

Thusly-formed two components are stacked interposed by a separator, and optionally wounded. An electrode terminal is joined to an outermost surface of the current collector via the process of the present invention described above. The resultant is introduced into a case and the case is partially sealed. An electrolyte composition generally comprising at least one solvent, at least one electrolyte, and optional additives is filled in the case by introducing the same via a pre-existing hole into the case, and the case is vacuum-sealed.

The connection prepared by means of the brazing flux in the battery of the present invention is preferably formed in a cathode section. In a particular preferred embodiment of the present invention, the electrode terminal of the cathode in the battery of the present invention comprises at least one metal element of aluminum or alloys thereof, and the current collector of the cathode in the battery of the present invention comprises at least one metal element of copper or alloys thereof.

Further aspect of the present invention concerns the use of a brazing flux for forming a connection between metal components within a battery cell. Details of the brazing flux in this aspect can be referred to the description provided in the above.

While preferred embodiments of this invention have been shown and described, modifications thereof can be made by one skilled in the art without departing from the spirit or teaching of this invention. The embodiments described herein are exemplary only and are not limiting. Many variations and modifications of systems and methods are possible and are within the scope of the invention. Accordingly, the scope of protection is not limited to the embodiments described herein, but is only limited by the claims that follow, the scope of which shall include all equivalents of the subject matter of the claims.

### BRIEF DESCRIPTION OF THE DRAWING(S)

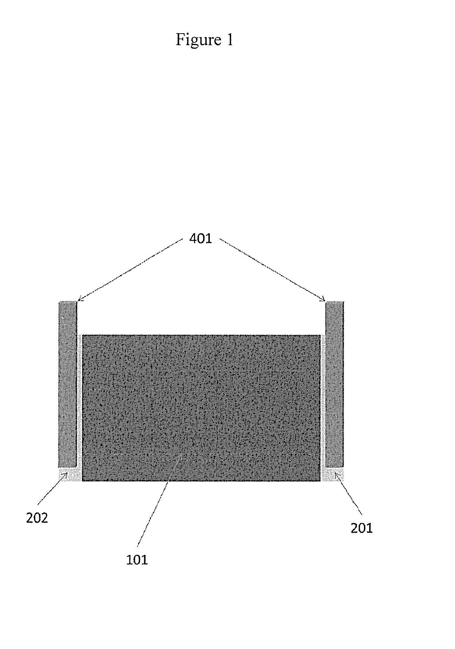

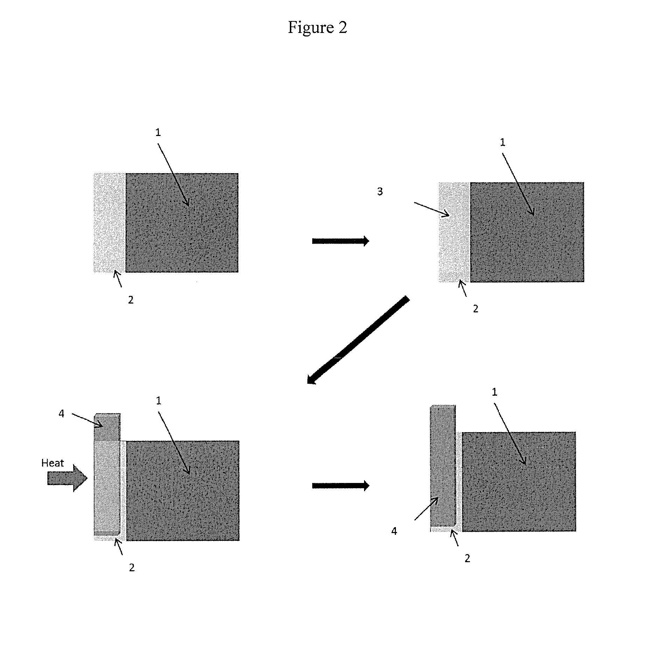

Figure 1 illustrates a schematic diagram showing a battery component prepared by the process of the present invention wherein the past have the following meaning.
   - 101: Jelly roll assembly (one or more stacks including an active anode material layer, an active cathode material layer, and a separator)
   - 201: Copper foil (current collector)
   - 202: Aluminium foil (current collector)
   - 401: Aluminium terminal
Figure 2 illustrates a flow chart showing the process of the present invention according to a following Example 1, wherein the parts have the following meaning.
   - 1: Active anode material
   - 2: Copper foil (current collector)
   - 3: Brazing flux
   - 4: Aluminium tenninal

The following examples will describe the invention in further detail without the intention to limit it.

### Example 1: Preparation of anode compartment of battery

Graphite is applied on one surface of copper foil (current collector) as an active anode material. After drying the active anode material, a brazing flux Nocolok^{®} (available from Solvay Fluor GmbH) is lightly applied on the opposite surface of the copper foil to which an electrode terminal is intended to be joined. Aluminium terminal is contacted to the applied brazing flux, and a laser beam irradiation is conducted topically on the portion where the brazing flux is applied. The resulting joining between the aluminium terminal and the copper foil shows an excellent contact resistance.

## Claims

1. A process of joining at least a part of a current collector with at least a part of an electrode terminal in a battery cell which comprises using a brazing flux.

2. The process according to claim 1, comprising applying the brazing flux on at least a part of joining surfaces of the current collector and the electrode terminal, contacting the joining surfaces, and heating the brazing flux to form a connection between the current collector and the electrode terminal.

3. The process according to claim 2, wherein the heating is conducted by applying a laser beam topically on at least a part of the brazing flux.

4. The process according to any one of claims 1 to 3, wherein the current collector comprises at least one metal element of copper or alloys thereof.

5. The process according to any one of claims 1 to 4, wherein the electrode terminal comprises at least one metal element of aluminium or alloys thereof.

6. The process according to any one of claims 1 to 5, wherein the thickness of the current collector is in a range from 0.001 to 1 mm.

7. The process according to any one of claims 1 to 6, wherein the thickness of the electrode terminal is in a range from 0.001 to 10 mm.

8. The process according to any one of claims 1 to 7, wherein the brazing flux comprises at least one metal element of aluminium, silicon, zinc, or alloys thereof.

9. The process according to any one of claims 1 to 7, wherein the brazing flux comprises at least one alkali metal fluoroaluminates, in particular cesium fluoroaluminates.

10. A battery cell at least comprising an anode, a cathode, and an electrolyte composition, each of the anode and the cathode comprises an active-electrode material layer, a current collector, and an electrode terminal, wherein at least one electrode terminal is joined to at least a part of the current collector by means of a brazing flux.

11. The battery cell according to claim 10, wherein the electrode terminal of the cathode comprises at least one metal element of aluminium or alloys thereof, and the current collector of the cathode comprises at least one metal element of copper or alloys thereof.

12. The battery cell according to claim 10 or 11, wherein the brazing flux comprises at least one metal element of aluminium, silicon, zinc, or alloys thereof.

13. The battery cell according to any one of claims 10 to 12, wherein the brazing flux comprises at least one alkali metal fluoroaluminates, in particular cesium fluoroaluminates.

14. Use of a brazing flux for forming a connection between metal components within a battery cell.
